# EUROPEAN PATENT APPLICATION

(11) **EP 2 759 576 A1**
(43) Date of publication of application: **30.07.2014**
(21) Application number: 12832825.9
(22) Date of filing: 18.09.2012
(51) Int. Cl.: C09D 17/00, C01B 31/02, C08K 3/04, C08L 1/02, C09C 1/44

(54) **CARBON PARTICLE DISPERSION AND METHOD FOR PRODUCING SAME**

(30) Priority: 22.09.2011 JP 2011206699
(71) Applicant: Toppan Printing Co., Ltd., Tokyo 110-0016 (JP)
(72) Inventor: NISHIJIMA Nao, Tokyo 110-0016 (JP); OOMORI Yumiko, Tokyo 110-0016 (JP); KIMURA Mitsuharu, Tokyo 110-0016 (JP); SHIMIZU Kosuke, Tokyo 110-0016 (JP)
(74) Representative: TBK
(86) International application number: PCT/JP2012/073811
(87) International publication number: WO 2013/042652

(57) **Abstract**

Provided are a dispersion of carbon particles having good dispersibility and dispersion stability, and a method for preparing same. [Solving Measure] The dispersion is characterized by comprising, at least, carbon particles, a fibrous polysaccharide having carboxyl groups, and a dispersion medium. The method for preparing a dispersion is characterized by comprising the steps, in this order, of dispersing a polysaccharide having carboxyl groups in a dispersion medium to prepare a preparation solution containing fibrous polysaccharide and the dispersion medium, and dispersing carbon particles in the preparation solution to prepare a dispersion containing the fibrous polysaccharide, the carbon particles and the dispersion medium.

## Description

### Technical Field

The present invention relates to a carbon particle dispersion and also to a method for producing the same.

### Technical Background

Carbon black is a type of soot which is industrially generated by incomplete combustion in pyrolysis of hydrocarbons, and has been used from old times as a black pigment making use of black color thereof and as a rubber reinforcing agent relying on its high mechanical strength. Furthermore, nanometer-sized carbon materials, such as fullerenes, carbon nanotubes and carbon nanofibers, have been developed, and their high electrical conductivity, thermal conductivity and unique optical characteristics have attracted attentions. It is therefore expected that they will be utilized in a diversity of fields such as of electronics including conductive resins, materials for electrodes of secondary batteries, EMI shielding materials and optical displays, of printing, of energy and of medical use.

By the way, carbon particles including carbon black has a large specific surface area and thus, a ratio of surface energy occupied in the total potential energy becomes great, thereby permitting physical aggregation to pronouncedly occur by the action of van der Walls forces, with the likelihood of forming aggregates through strong interaction with adjacent particles. Hence, a difficulty is involved in stably keeping dispersion in media and stability after the dispersion.

Carbon particles have a number of functional groups, such as a carboxyl group, a hydroxyl group and an ether group, on the surface thereof. It is known that especially, acetylene black as one type of carbon black is low in the density of these hydrophilic functional groups and is thus hydrophobic in nature, so that its dispersion in aqueous systems is difficult.

Further, most of the carbon particles are porous because of production processes and contain a large amount of air therein. Therefore, it is considered that such carbon particles readily float in aqueous systems and are unlikely to be dispersed.

In this way, it is difficult to control the dispersion of carbon particles in media. On the other hand, the characteristics such as reinforcement when used as a reinforcing material and electric conductivity when kneaded in conductive resin are more greatly influenced by the dispersibility, most of the functions are efficiently shown in a good dispersion state.

Many attempts have been made in order to solve those problems.

Patent Literature 1 discloses a method of suppressing aggregation using a water-soluble organic polymer such as pectin, alginic acid or the like to allow for absorption to carbon nanotubes thereby preventing mutual interaction between carbon nanotubes. However, the use of this method is unsatisfactory with respect to dispersion in resin and heat resistance. Patent Literature 2 discloses a method of solubilizing carbon particles by using micelles of amphoteric surface active agents as a dispersant. However, although this method is able to improve the dispersibility of carbon particles, there is some possibility of causing re-aggregation and precipitation, thus presenting a problem on dispersion stability. In Patent Literature 3, there is disclosed a method of adsorbing synthetic polymers containing an imide group on the surface of carbon particles. However, although this method is able to improve heat resistance and compatibility with resin, mutual aggreagation of carbon particles cannot be well suppressed, with the attendant problem that electrical and mechanical characteristics of carbon particles are shown satisfactorily.

### Prior Art Literature

### Patent Literature

Patent Literature 1: Japanese Unexamined Patent Publication Application No. 2004-531442;
Patent Literature 2: Japanese Laid-open Patent Application No. 2008-37742; and
Patent Literature 3: Japanese Laid-open Patent Application Publication No. 2009-256617.

### Summary of the Invention

### Problem to be solved by the Invention

The present invention has been made while taking the technical background as set out above into account and has for its object the provision of a dispersion wherein carbon particles are readily dispersed and good dispersion stability is ensured without causing re-aggregation or precipitation.

### Means for solving the problems

For solving the above problems, the invention recited in claim 1 provides a dispersion, characterized by comprising, at least, carbon particles, a fibrous polysaccharide having carboxyl groups and a dispersion medium.

Next, the invention recited in claim 2 is characterized in that in the configuration recited in claim 1, the carbon particles have a particle size from not less than 0.001 µm to not larger than 1 µm.

The invention recited in claim 3 is characterized in that, in the configuration recited in claim 1 or claim 2, the fibrous polysaccharide having a carboxyl group is made of cellulose fibers.

The invention recited in claim 4 is characterized in that, in the configuration recited in claim 3, a fiber width of the cellulose fiber ranges from not less than 2 nm to not larger than 50 nm, and a fiber length of the cellulose fibers ranges from not less than 0.5 µm to not larger than 50 µm.

The invention recited in claim 5 is characterized in that, in the configuration recited in claim 3 or 4, an amount of the carboxyl groups in the cellulose fibers relative to a weight of the cellulose fibers is from not less than 0.5 mmol/g to not larger than 3.0 mmol/g.

The invention recited in claim 6 is characterized in that, in the configuration recited in any of claims 3 to 5, at least part of the carboxyl groups in the cellulose fibers is a carboxylate.

The invention recited in claim 7 is characterized in that, in the configuration recited in any of claims 3 to 5, the carbon particles are made of pretreated carbon particles.

The invention recited in claim 8 provides a method of preparing a dispersion, characterized by comprising the successive steps of:
dispersing a polysaccharide having carboxyl groups in a dispersion medium to prepare a preparation solution containing a fibrous polysaccharide and the dispersion medium; and
dispersing carbon particles in the preparation suspension to prepare a dispersion containing the fibrous polysaccharide, the carbon particles and the dispersion medium.

The invention recited in claim 9 is characterized by comprising the step of dispersing a polysaccharide having carboxyl groups and carbon particles in a dispersion medium to prepare a dispersion containing the fibrous polysaccharide, the carbon particles and the dispersion medium.

The invention recited in claim 10 is characterized by comprising the successive steps of:
dispersing a polysaccharide having carboxyl groups in a dispersion medium to prepare a first preparation solution containing a first fibrous polysaccharide and the dispersion medium;
dispersing carbon particles in the first preparation solution to prepare a second preparation solution containing the first fibrous polysaccharides, the carbon particles and the dispersion; and
subjecting the second preparation solution to dispersion treatment to prepare a preparation solution containing the fibrous polysaccharide, the carbon particles and the dispersion medium.

The invention recited in claim 11 is characterized in that, in the configuration recited in claim 8, a pH in the step of preparing the preparation suspension is from not less than 7 to not larger than 12.

The invention recited in claim 12 is characterized in that, in the configuration recited in claim 9, a pH in the step of preparing the dispersion is from not less than 7 to not larger than 12.

The invention recited in claim 13 is characterized in that, in the configuration recited in claim 10, a pH in the step of preparing the first preparation suspension is from not less than 7 to not larger than 12.

### Effects of the Invention

According to the invention, there can be prepared a dispersion in which carbon particles are easily dispersed and which has good dispersion stability without causing re-aggregation and precipitation. Although the mechanism of dispersibility and dispersion stability of the carbon particles in the invention is not clearly known, it is considered that the hydroxyl groups inherent to a fibrous polysaccharide present in the dispersion and the carboxyl groups imparted through chemical treatment, and the carboxyl groups and hydroxyl groups present on the surface of individual carbon particles are interacted, and the carboxyl groups of the fibrous polysaccharide are partly dissociated to allow mutual electrostatic repulsion thereof, thus permitting easy dispersion and good stability in dispersed state.

Further, since the dispersion of the invention contains a fibrous polysaccharide, attendant effects can be obtained such as on the good film-forming property ascribed to the mutual entanglement of the fibers and the heat resistance inherent to the polysaccharide, an improved yield of carbon particles resulting from the capture of the carbon particles to the polysaccharide, and improved conductivity attributed to the dissociation of the carboxyl groups contained in the polysaccharide. The chemical or mechanical load against carbon particles is so small that the inherent characteristics of carbon particles can be shown. While taking the above effect into account, developments in various fields and for various application are enabled using the invention.

### Mode for Carrying out the Invention

The dispersion of the invention is characterized by comprising, at least, carbon particles, a fibrous polysaccharide having carboxyl groups and a dispersion medium.

One embodiment of the invention is now described.

The carbon particles used in the invention include, aside from all types of carbon blacks (furnace black, channel black, thermal black, acetylene black, Ketjen black and lamp black), fullerenes, carbon nanotubes, carbon nanohorns, carbon nanofibers, and graphite. Any of physically or chemically treated materials of these carbon blacks may also be used.

In addition, carbon particles may be surface-treated for pretreatment. For the surface treatment, mention can be made of oxidation treatment, graft polymerization reaction, coupling treatment, mechanical treatment, plasma treatment, graphitization, activation treatment, etc. When the pretreatment is carried, it becomes possible to change the surface state of carbon particles to introduce a variety of functional groups therein, to improve reactivity and compatibility with a matrix resin by formation of an organic layer, or to improve dispersability by inhibiting aggregation of carbon particles per se.

Metals may be supported. As a metal, there can be used, aside from platinum group elements such as platinum, palladium, ruthenium, iridium, rhodium and osmium, metals such as iron, lead, copper, chromium, cobalt, nickel, manganese, vanadium, molybdenum, gallium, aluminum, etc. or alloys thereof, or oxides, composite oxides and carbides thereof.

If the particle size of carbon particles is too large, the mutual interaction of the particles becomes relatively small with the unlikelihood of aggregation and thus, the dispersion effect according to the invention is less likely to be shown. On the contrary, with too small a size, aggregation of carbon particles becomes pronouncedly to low stability. Thus, the size is from not less than 0.001 µm to not larger than 1 µm. The particle size is obtained by observation through SEM or TEM.

Although the mechanism of dispersibility and dispersion stability carbon particles in the invention is not clear, it is considered that the hydroxyl groups inherent to a fibrous polysaccharide present in the dispersion and the carboxyl groups imparted through chemical treatment, and the carboxyl groups and hydroxyl groups present on the surface of individual carbon particles are interacted, and the carboxyl groups of the fibrous polysaccharide are partly dissociated to allow mutual electrostatic repulsion thereof, thus permitting easy dispersion and good stability in dispersed state.

As a fibrous polysaccharide, mention is made of cellulose, chitin, chitosan, etc. In particular, cellulose fibers having a regular structural sequence and a rigid skeleton are preferred. For celluloses serving as a starting material of cellulose fibers, there can be used wood pulp, non-wood pulp, cotton, bacterium cellulose, etc.

The fibrous polysaccharides, particularly cellulose fibers, should preferably have a fiber width of from not less than 2 nm to not larger than 50 nm and a length of from not less than 0.5 µm to not larger than 50 µm. Within these ranges, there exist a multitude of sites capable of interaction with carbon particles. Thus, good dispersibility is obtained and good dispersion stability is ensured owing to the mutual electrostatic repulsion of cellulose fibers. Moreover, the mutually entangled structure of cellulose fibers enables a film to be formed according to a method such as of casting a dispersion alone without use of a binder, and its use becomes much enlarged by utilizing the good film-forming property of the dispersion obtained by the invention. Carbon particles which are captured with the mutually entangled structure of cellulose fibers are unlikely to fall off, so that the yield can be improved. On the other hand, when the fiber width exceeds 50 nm, a ratio of the surface area occupied in the total area of the cellulose fibers becomes relatively small. This leads to a reduced number of sites capable of interaction with carbon fibers with less possibility of efficient dispersion of carbon particles. If the length is less than 0.5 µm, mutual entanglement of cellulose fibers does not proceed sufficiently thereby unfavorably causing a strength lowering of film. If the length exceeds 50 µm, cellulose fibers are mutually entangled to a great extent and the fibers are unlikely to be dispersed, so that precipitation is readily formed, resulting in lowered dispersion stability. The fiber width and length can be measured through AFM or TEN by developing and drying, on glass or the like, fibers diluted with a solvent such as water to a solid concentration of about 0.1%.

It will be noted that within ranges not forming aggregation or precipitation, there may be various types of additives including water-soluble polysaccharides and various types of resin may be further contained for the purpose of more increasing mutual electrostatic repulsion of fibers, controlling the viscosity of dispersion or imparting functionalities such as of coatability, wettability and the like. For example, there may be used chemically modified cellulose such as carboxymethylcellulose, carrageenan, xanthan gum, sodium alginate, agar, solubilized starch, silane coupling agents, leveling agents, defoaming agent, water soluble polymers, synthetic polymers, inorganic particles, organic particles, lubricants, etc.

It is preferred that an amount of the carboxyl groups in the cellulose fibers relative to a weight of the cellulose is within a range of not less than 0.5 mmol/g to not larger than 3.0 mmol/g. The cellulose fibers having carboxyl groups within this range exhibit good dispersibility when subjected to dispersion treatment, and ensures adequate interaction with the functional groups of carbon particles, so that good dispersibility in the dispersion can be obtained. Additionally, part of the carboxyl groups is preferably made of carboxylate. As a cation serving as a counter ion of the carboxyl group, mention is made, for example, of alkali metal ions (lithium, sodium, potassium, etc.), alkaline earth metals (calcium, etc.), an ammonium ion, and organic oniums (amines such as an aliphatic amine, an aromatic amine and a diamine, and ammonium hydroxide compounds represented by NR4 OH (wherein R is an alkyl group, a benzyl group, a phenyl group or a hydroxyalkyl group, and four R's may be the same or different) such as tetramethylammonium hydroxide, tetraethylammonium hydroxide, tetra-n-butylammonium hydroxide, benzyltrimethyl ammonium hydroxide, 2-hydroxyethyltrimethylammonium hydroxide and the like , phosphonium hydroxide compounds such as tetraethylphosphonium hydroxide, oxonium hydroxide compounds, sulfonium hydroxide compounds, etc. Two or more of these may be mixed to form salts.

It is considered that the electrostatic repulsion between cellulose fibers is increased by dissociation of carboxyl groups of the cellulose fibers, which makes it possible to keep dispersibility of the cellulose fibers. Hence, the carboxyl groups should preferably be kept as ionized. In addition, if the dispersion contains metal ions, such as sodium ions, as a counter ion and is utilized for electronic components such as a semiconductor, a fuel cell, etc., the incorporation of these metal ions adversely influences electric characteristics. Thus, to contain metal ions may be unfavorable in some cases. In this case, the use of organic alkalis can solve these problems. In case where an organic solvent is used as a medium for an organic alkali, cellulose fibers and carbon particles having high affinity for organic solvent are able to provide a dispersion having good dispersibility.

Upon taking the effects of cellulose fibers as a binder into consideration, they have electric conductivity, even though slightly, due to the carboxyl groups thereof and their ionization, so that good electric conductivity can be kept with use of the dispersion. Moreover, when the dispersion of carbon particles is admixed with a resin, a treatment at high temperature is carried out in the course of melting the resin. Cellulose fibers have a thermal decomposition temperature of 240 °C and may be thus said to have good thermal resistance.

For the method of introducing carboxyl groups into cellulose, several chemical treatments have been reported. If using water-soluble polysaccharides dispersed in molecular level, such as carboxymethylcellulose, there is concern that carbon particles are covered on the surface thereof with the water-soluble polysaccharide or the interaction between the carbon particles lowers, thereby leading to a lowering of characteristics such as conductivity. Therefore, in order to provide such a structure of cellulose that is fibrous and good at dispersibility and is capable of efficient interaction between carbon particles and the carboxyl groups of cellulose, it is preferred that carboxyl groups are introduced into highly crystalline cellulose having a rigid skeleton and the carboxyl groups exist densely, regularly on the fiber surfaces.

Specifically, it is preferable to use the following method. The cellulose is treated using 2, 2, 6, 6-tetramethylpiperidin-1-yl oxy radical (TEMPO) as a catalyst and also using an oxidant such as of sodium hypochlorite and a bromide such as sodium bromide while adjusting a pH. According to this method, primary hydroxyl groups alone at the C6 position of cellulose present on the surface of microfibrils, which are a minimum fibrous unit having crystallinity, are selectively oxidized into carboxyl groups by the steric hindrance of TEMPO. The bonds of the microfibrils are loosened by the action of electrostatic repulsion of the thus introduced carboxyl groups. Thus, there can be obtained highly dispersed fibrous cellulose having high crystallinity can be obtained by mechanical low-energy treatment. When using this method, mechanical strength can be maintained because the molecular weight of the resulting cellulose fibers is suppressed from lowing.

A specific method of the above chemical treatment is described below.

Nitroxy radicals and sodium bromide are added to the cellulose dispersed in water, to which a sodium hypochlorite aqueous solution is added at room temperature under agitation thereby causing the cellulose to be oxidized. During the oxidation reaction, a solution of an alkali such as sodium hydroxide is added so as to adjust a pH of the reaction system to 9 - 11.

At this time, the hydroxyl groups at the C6 position of cellulose are oxidized into carboxyl groups. After well washing with the water, the resulting mixture wherein the cellulose is dispersed fibrously can be used as a constituent material for dispersion. For the oxidant, hypohalous acid or salts thereof, and halous acid or salts thereof are usable, of which sodium hypochlorite is preferred. Although it is possible to use, as a bromide, lithium bromide, potassium bromide, sodium bromide, etc., of which sodium bromide is preferred.

It will be noted that the amount of the carboxyl groups contained in the cellulose is calculated according to the following method. 0.2 g of chemically treated cellulose on dry weight basis was taken in a beaker, to which 80 ml of ion-exchanged water was added. 5 ml of a 0.01 M aqueous sodium chloride solution was further added, followed by still further addition of 0.1 M of hydrochloric acid with agitation to adjust the pH to 2.8 as a whole. A 0.1M sodium hydroxide aqueous solution was added at 0.05 ml/30 seconds by use of an automatic titration device (AUT-701, manufactured by DKK-TOA CORPORATION) to measure an electric conductivity and a pH value are measured in every 30 seconds and the measurements were continued to a pH of 11. The titration amount of sodium hydroxide was determined from the obtained conductivity curve, and the content of the carboxyl groups was calculated.

By the way, mention is made, as a dispersion medium, of water or a mixed solvent of water and an organic solvent. The organic solvents used herein may be any of water-soluble organic solvents uniformly compatible with water and include, for example, alcohols such as methanol, ethanol and 2-propanol (IPA), ketones such as acetone, methyl ethyl ketone (MEK) and the like, ethers such as 1, 4-dioxane, tetrahydrofuran (THF) and the like, N, N-dimethyl formamide (DMF), N,N-dimethyl acetamide (DMAc), dimethyl sulfoxide (DMSO), acetonitrile, ethyl acetate and the like. These may be used singly or in admixture of two or more. Where a mixed solvent of water and a water-soluble organic solvent is used as a dispersion medium, a mixing ratio thereof is appropriately determined while taking into account the type of water-soluble organic solvent and the affinity between water and the water-soluble organic solvent.

Next, a method of preparing a dispersion is described.

With respect to the preparation of a dispersion, there are broadly three methods (1) - (3), any of which can be selected depending on various physical properties and the manner of application.

In the method (1), a preparation solution is preliminarily prepared, in which a polysaccharide having carboxyl groups is dispersed in a dispersion medium in the form of nanometer-sized fibers (in the state where the polysaccharide is well dispersed). Carbon particles are mixed and dispersed in the preparation solution (the dispersion of carbon particles does not require a great shear force. Agitation may be sufficient for this.) thereby preparing a dispersion of carbon particles. When using this method, an excess load, such as a shear force applied upon dispersion of the polysaccharide, need not be imparted to the carbon particles. Accordingly, when carbon particles having a relatively large aspect ratio are used, there can be prepared a dispersion without destroying the structure of the carbon particles. In addition, it is possible to exactly control a degree of dispersion of polysaccharide. Moreover, in the step of preparing the preparation solution, the pH is adjusted within a range of not less than 4 and not larger than 12. Especially, it is preferred that the pH is adjusted to alkalinity of a pH of not less than 7 to a pH of not larger than 12. To be rendered alkaline is likely to cause mutual electrostatic repulsion of the carboxyl groups of the polysaccharide to occur, thus leading to improved dispersibility. The improvement in the dispersibility of polysaccharide allows the carboxyl groups on the fiber surface and the carbon particles to be efficiently interacted. Although the polysaccharide may be dispersed according to a mechanical dispersion treatment at a pH of less than 4, the dispersion treatment requires a long time and high energy, and the fiber diameter of the resulting fibers becomes larger than that of the invention.

Next, with the method (2), a polysaccharide having carboxyl groups and carbon particles are initially mixed and subsequently dispersed in a dispersion medium. When using this method, the dispersion of the polysaccharide and the dispersion of the carbon particles proceed simultaneously, so that the time and energy required for the preparation can be reduced. Further, after the mixing of the polysaccharide having carboxyl groups and the carbon particles in the dispersion medium, the pH is adjusted within a range of not less than 4 to not larger than 2, Preferably from not less than 7 to not larger than 12 before or after the dispersion. This makes it possible to improve the dispersibility of the polysaccharide and to cause efficient interaction between the carbon particles and the polysaccharide.

Next, with the method (3), a polysaccharide having carboxyl groups is partially dispersed in a dispersion medium (in the state wherein the polysaccharide is not adequately dispersed which corresponds to a first preparation solution), with which carbon particles are admixed (which corresponds to a second preparation solution). Thereafter, the second preparation solution is subjected to dispersion treatment to an extent where the polysaccharide and the carbon particles are well dispersed, thereby preparing a preparation solution including the fibrous polysaccharide, carbon particles and the dispersion medium. According to this method, there can be obtained a good dispersion in case where dispersion is unlikely to occur depending on the structure or molecular weight and the surface state of the polysaccharide or in case where viscosity rise occurs. If an arbitrary dispersion treatment is carried out after the mixing of the carbon particles, the control in dispersibility of the carbon particles becomes possible. Since the dispersion of polysaccharide and the dispersion of carbon particles can be performed through a series of batches, workability is improved. Moreover, when the polysaccharide having carboxyl groups are partially dispersed in a dispersion medium, the pH is adjusted in the range of not less than 4 to not larger than 12, preferably from not less than 7 to not larger than 12. This permits the dispersibility of the polysaccharide to be improved though such a mechanism as in the methods (1), (2) and thus, the interaction between the carbon particles and the polysaccharide to efficiently occur.

It will be noted that although no specific limitation is placed on the method of dispersing a polysaccharide having carboxyl groups and also on the manner of dispersion in the course of the preparation of a dispersion by mixing of carbon particles, there are used a variety of pulverizers, mixers, agitators, dispersion with ultrasonic waves, etc. For example, there may be used treating methods using a shearing force or collision as caused by mixers, high-speed mixers, share mixers, blenders, ultrasonic homogenizers, high pressure homogenizers and ball mills, and Waring blenders, flush mixers, turbulizers, etc. These may be used in combination. In this way, a polysaccharide is formed into nanometer-sized fibers and carbon particles efficiently interact on the dispersed fibers, thereby preparing a dispersion having good dispersibility and dispersion stability.

For the preparation of a dispersion of the invention, it is preferred that ratios of carbon particles, a fibrous polysaccharide having carboxyl group and a dispersion medium are such that when the weight of the carbon particles is taken as 1, the fibrous polysaccharide having carboxyl group is in the range of 0.1-100 and the dispersion medium is in the range of 1 - 100000.

### Examples

The invention is more particularly described by way of examples, to which the invention should not be construed as limited. It will be noted that the results of various evaluations are summarized in Table 1.

### -Reagents and materials-

Cellulose: bleached kraft pulp (Fletcher Challenge CANADA Ltd. [Machenzie])
TEMPO: Commercial product (Tokyo Chemical Industry Co., Ltd., 98 %) Sodium hypochlorite: Commercial product (Wako Pure Chemical Industries, Ltd., Cl: 5 %)
Sodium bromide: Commercial product (Wako Pure Chemical Industries, Ltd.)
Carbon black: Commercial product (Mitsubishi Chemical Corporation, #40),
Sodium carboxymethylcellulose: Commercial product (Wako Pure Chemical Industries, Ltd.)
Starch: Commercial product (Tokyo Chemical Industry Co., Ltd.).

### Example 1

Cellulose (with an amount of carboxyl groups being at 1.8 mmol/g) imparted with carboxyl groups by TEMPO oxidation was prepared. The pH was adjusted to 10 by use of 1N sodium hydroxide while adding ion-exchanged water so that the solid concentration of cellulose became 1 % as a whole. These were treated over 1 hour by use of a mixer (absolute mill, made by OSAKA CHEMICAL Co. Ltd., 14,000 rpm) to prepare a preparation solution containing cellulose fibers. The thus prepared cellulose fibers had a fiber width of 3 nm and a fiber length of 1.6 µm. 5 ml of the preparation solution, 50 mg of carbon black and 15 ml of ion-exchanged water were mixed and stirred for one hour by means of a table stirrer to prepare a dispersion of the carbon black. One hour after the stirring, the dispersion was allowed to stand. The dispersibility after one hour from commencement of the dispersion of carbon black and the dispersion stability after standing over one month were visually observed. Next, 2 ml of the dispersion obtained one hour after commencement of the dispersion was dropped on a glass substrate having a size of 3.5 cm x 6.0 cm, followed by drying at 100°C for 30 minutes to evaluate film- forming property and conductivity (DIA Instruments Co. Ltd., high resistivity meter Hiresta-UP). In addition, the dispersion obtained one hour after commencement of the dispersion was diluted tenfold and dropped on the surface of a glass substrate and observed with a microscope to measure a particle size at a microscopic magnification of 1,000X.

### Comparative Example 1

50 mg of carbon black and 20 ml of ion-exchanged water were mixed and stirred by means of a table stirrer to prepare a dispersion of the carbon black. The dispersibility, dispersion stability, film-forming property and conductivity were evaluated in the same manner as in Example 1.

### Comparative Example 2

50 mg of carboxymethylcellulose (CMC) (with a substitution degree of 1.2), 50 mg of carbon black and 20 ml of ion-exchanged water were mixed and stirred by means of a table stirrer to prepare a dispersion of the carbon black. The dispersibility, dispersion stability, film-forming property and conductivity were evaluated in the same manner as in Example 1.

### Comparative Example 3

50 mg of soluble starch, 50 mg of carbon black and 20 ml of ion-exchanged water were mixed and stirred by means of a table stirrer to prepare a dispersion of the carbon black. The dispersibility, dispersion stability, film-forming property and conductivity were evaluated in the same manner as in Example 1.

**[Table 1]**

| Composition | | Example 1 | Comparative Example 1 | Comparative Example 2 | Comparative Example 3 |
|---|---|---|---|---|---|
| | Carbon black (wt%) | 0.25 | 0.25 | 0.25 | 0.25 |
| | Cellulose fibers (wt%) | 0.25 | - | - | - |
| | CMC (wt%) | - | - | 0.25 | - |
| | Starch (wt%) | - | - | - | 0.25 |
| | Water (ml) | 20 | 20 | 20 | 20 |
| Dispersibility | Microscopic observation (µm) | ○ | Δ | ○ | ○ |
| 1 hour after stirring | | 0.22 | 3.9 | 1.2 | 1.9 |
| | | | | | |
| Dispersion stability | | ○ | x | x | x |
| after 1 month | | | | | |
| Film-forming property | | ○ | x | ○ | x |
| Conductivity | Surface resistance (Ω/□) | 1.1x10⁵ | - | 3.2x10⁵ | - |

In Table 1, symbol "○" for dispersion stability means that precipitation of carbon particles could not be observed visually one day after standing of the dispersion, and symbol "x" means that precipitation of carbon particles could be visually observed one day after standing of the dispersion. Symbol "○" for film-forming property means one which could form a self-standing film and symbol "x" means one which could not form a self-standing film.

As shown in Table 1, it could be confirmed that the conductivity and dispersibility, and particularly, dispersion stability could be remarkably improved owing to the presence of the cellulose fibers imparted with carboxyl groups in the dispersion of carbon particles.

### Industrial applicability

According to the invention, there can be prepared a dispersion of good dispersion stability wherein carbon particles are readily dispersed without causing re-aggregation and precipitation. Further, since the dispersion of the invention has an excellent film-forming property, conductivity and thermal resistance, it could be applied to a variety of fields and application. For instance, the dispersion has utilities as a coating film making use of the film-forming property and printing characteristics of the dispersion, a conductive resin or conductive paper obtained by mixing with resin or paper, and a material for secondary battery electrode making use of excellent electric characteristics, and also as an EMI shielding material and a material for optical displays.

## Claims

1. A dispersion, **characterized by** comprising, at least, carbon particles, a fibrous polysaccharide having carboxyl groups and a dispersion medium.

2. The dispersion as defined in Claim 1, **characterized in that** the carbon particles have a particle size of not less than 0.001 µm to not larger than 1 µm.

3. The dispersion as defined in Claim 1 or 2, **characterized in that** the fibrous polysaccharide having carboxyl groups is made of cellulose fibers.

4. The dispersion as defined in Claim 3, **characterized in that** the cellulose fibers have a fiber width of from not less than 2 nm to not larger than 50 nm, and the cellulose fibers have a fiber length of from not less than 0.5 µm to not larger than 50 µm.

5. The dispersion as defined in Claim 3 or 4, **characterized in that** an amount of the carboxyl groups of the cellulose fibers is from not less than 0.5 mmol/g to not larger than 3.0 mmol/g on the weight basis of the cellulose.

6. The dispersion as defined in any one of Claims 3 to 5, **characterized in that** at least a part of the carboxyl groups of the cellulose fibers is in the form of a carboxylate.

7. The dispersion as defined in any one of Claims 3 to 5, **characterized in that** the carbon particles are made of pretreated carbon particles.

8. A method for preparing a dispersion, **characterized by** comprising the steps of:
dispersing a polysaccharide having carboxyl groups in a dispersion medium to prepare a preparation solution having the fibrous polysaccharide and the dispersion medium; and
dispersing carbon particles in the preparation solution to prepare a dispersion containing the fibrous polysaccharide, the carbon particles and the dispersion medium,
the steps being successive in this order.

9. A method of preparing a dispersion, **characterized by** comprising the step of dispersing a polysaccharide having carboxyl groups and carbon particles in a dispersion medium to prepare a dispersion containing the fibrous polysaccharides, the carbon particles and the dispersion medium.

10. A method for preparing a dispersion, **characterized by** comprising the steps of:
dispersing a polysaccharide having carboxyl groups in a dispersion medium to prepare a first preparation solution containing a first fibrous polysaccharide and the dispersion medium;
dispersing carbon particles in the first preparation solution to prepare a second preparation solution containing the first fibrous polysaccharide, the carbon particles and the dispersion medium; and
subjecting the second preparation solution to dispersion treatment to prepare a preparation solution containing the fibrous polysaccharide, the carbon particles and the dispersion medium,
the steps being successive in this order.

11. The method for preparing a dispersion as defined in Claim 8, **characterized in that** a pH in the step of preparing the preparation solution is from not less than 7 to not larger than 12.

12. The method for preparing a dispersion as defined in Claim 9, **characterized in that** a pH in the step of preparing the dispersion is from not less than 7 to not larger than 12.

13. The method for preparing a dispersion as defined in Claim 10, wherein a pH in the step of preparing the first preparation solution is from not less than 7 to not larger than 12.
